(19) Europäisches Patentamt
European Patent Office
Office européen des brevets

(11) **EP 4 261 421 A1**

(12) **EUROPEAN PATENT APPLICATION**

(43) Date of publication:
**18.10.2023 Bulletin 2023/42**

(21) Application number: **22167761.0**

(22) Date of filing: **12.04.2022**

(51) International Patent Classification (IPC):
**F16B 1/00** (2006.01)  **F16B 37/00** (2006.01)

(52) Cooperative Patent Classification (CPC):
**F16B 37/00;** F16B 2200/95

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hilti Aktiengesellschaft**
**9494 Schaan (LI)**

(72) Inventors:
• **Spampatti, Matteo**
**9470 Buchs (CH)**
• **Kurz, Tobias**
**9477 Trübbach (CH)**
• **Wielgat, Marcin**
**9472 Grabs (CH)**

(74) Representative: **Hilti Aktiengesellschaft**
**Corporate Intellectual Property**
**Feldkircherstrasse 100**
**Postfach 333**
**9494 Schaan (LI)**

(54) **MARKED THREADED FASTENER MANUFACTURE AND FASTENER**

(57)    Method for manufacturing a marked threaded fastener (1) comprising,
- a providing step, in which a threaded fastener (1) having at least one marking surface (2) is provided,
- following the providing step, a roughening step, in which the marking surface (2) is roughened, and
- following the roughening step, a marking step, in which a marking (4) is applied to the at least one marking surface (2). Also described is a threaded fastener (1), having a marking surface (2), on top of which at least one coating layer (3) is provided, on top of which at least one marking (4) is provided, wherein the marking surface (2) has gloss ranging from 5 gloss units to 50 gloss units, inclusive.

Fig. 1

EP 4 261 421 A1

**Description**

The invention relates to a method for manufacturing a marked threaded fastener and to a threaded fastener.

EP1171716 B1 describes threaded nuts having 2D barcodes located thereon.

Applying barcodes to threaded fasteners, such as nuts, can pose technical challenges, in particular when the fasteners are steel fasteners, such as carbon steel fasteners or stainless-steel fasteners, provided with a hydrophobic functional coating, such as a friction-modifying coating and/or a corrosion protective coating.

- Laser-marking might damage surfaces, thereby promoting corrosion.
- Throughput of laser-marking might be limited, which might be disadvantageous in view of mass production.
- Ink printing might imply adhesion issues when printing on functional top coatings, resulting in the code marking being not environmentally robust enough for certain applications, in particular outdoor applications
- Markings on bright surfaces might be difficult to read out.

It is an object to provide a method for manufacturing a fastener attending these and/or other technical challenges, and/or to provide a durable and machine scannable marking solution, in particular for carbon steel or stainless fasteners, in particular suitable for mass production.

The object is solved by a method according to claim 1 and by a fastener according to claim 9. Dependent claims describe preferred embodiments of the method.

The invention proposes a method for manufacturing a marked threaded fastener comprising,

- a providing step, in which a threaded fastener having at least one marking surface is provided,
- following the providing step, a roughening step, in which the marking surface is roughened, in particular mechanically roughened, and
- following the roughening step, a marking step, in which a marking is applied to the at least one marking surface, in particular over the at least one coating layer.

The invention moreover proposes a threaded fastener, preferably manufactured by the method described here, having a marking surface, on top of which at least one coating layer or overcoat layer is provided, on top of which at least one marking is provided, wherein the marking surface has gloss ranging from 5 gloss units (GU) to 50 gloss units (GU), inclusive. Accordingly, the gloss is >= 5 GU and <=50 GU.

Accordingly, the threaded fastener is explicitly roughened before the code is applied by printing. Increased surface roughness resulting from the roughening step might increasing adhesion of the subsequently applied marking. Additionally or alternatively, said increased surface roughness might entail increased dullness, which in term might improve readability of the marking.

The roughening step can include roughening the entire surface of the threaded fastener or just parts of said surface. The marking typically extends only over a part of the at least one marking surface, but it might also extend over the entirety of the at least one marking surface. The marking is typically limited to the at least one marking surface, but in other embodiments, the marking might also extend beyond the at least one marking surface, into other surface areas of the threaded fastener.

The marking surface is the surface on which the marking is intended to be placed. Preferably, the marking surface is a spanner flat, that is a usually generally flat surface intended to be engaged by a spanner or a wrench for imparting torque onto the threaded fastener. Preferably, the threaded fastener has six spanner flats so as to form a hex drive.

The threaded fastener could for example be a screw. Preferentially, the threaded fastener is a nut having a threaded bore therein. The nut can be placed on the shaft of an expansion anchor.

In particular, the roughening step can include mechanical roughening, which includes abrasion. Alternatively, chemical roughening, e. g. etching, can be envisaged. In yet another embodiment, the roughening can include applying a material layer, in particular an anti-corrosion material layer, preferably a dull zinc layer, which provides increased roughness as compared to the originally provided marking surface. A dull zinc layer can provide both roughening and corrosion protection.

It is particularly preferred that the roughening step is a sandblasting step, in which the marking surface is roughened by sandblasting. Sandblasting includes propelling a stream of abrasive material against the marking surface. This may provide for particularly efficient roughening.

The method might be particularly suitable for steel fasteners, more preferably stainless-steel fasteners.

It is advantageous that in the roughening step, the marking surface is roughened to have a gloss ranging from 5 gloss units to 50 gloss units, inclusive (i.e. the gloss is >= 5 GU and <=50 GU). This can provide particularly good readability and/or adhesion of overlayers.

Preferably, the method further comprises, following the roughening step, a coating step, in which the roughened marking surface is coated with at least one coating layer or with at least one overcoat layer, wherein the marking step follows the coating step. This can further improve performance and/or durability. The coating step can include coating the entire surface of the threaded fastener or just parts of said surface.

The at least one coating layer or at least one overcoat layer is preferably a lubricant layer and/or water-based or solvent-based. Additional coatings can be applied, in addition to the at least one coating layer or at least one overcoat layer. In particular, in the marking step, the marking is applied to the at least one marking surface on top of the at least one coating layer.

The marking step could imply applying the marking by laser-marking. However, it is particularly preferred that the marking step is a printing step, in which the marking is printed on the at least one marking surface, in particular over the at least one coating layer. Applying the marking by printing, in particular ink jet printing, might allow for particularly high throughput.

The marking is preferably a barcode, in particular a 2D barcode, for example a QR code or a DMC code.

Features described here in connection with the fastener can also applied to the method, and vice versa.

The invention is explained in greater detail below with reference to preferred exemplary embodiments, which are depicted schematically in the accompanying drawings. Individual features of the exemplary embodiments presented below can be implemented either individually or in any combination within the scope of the present invention.

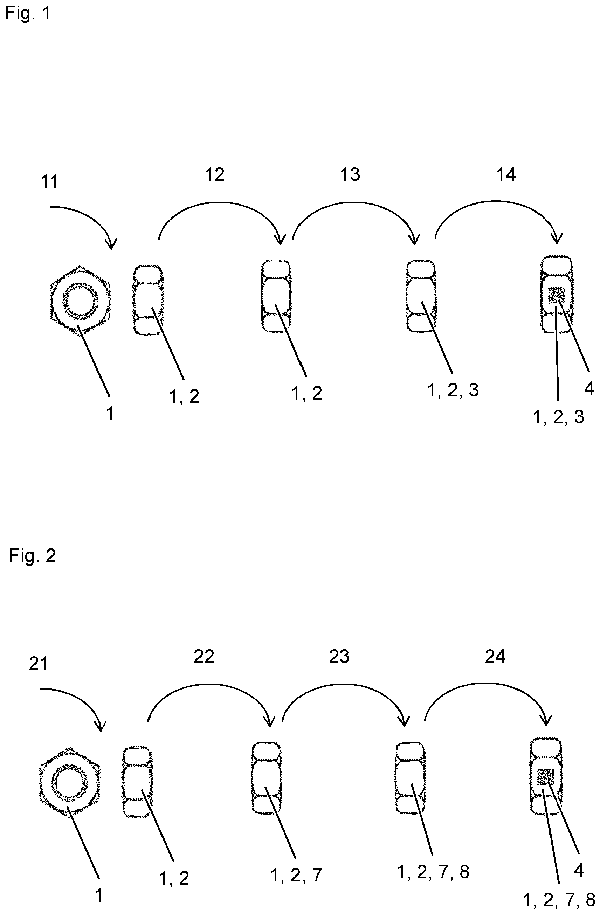

Figure 1 shows the step sequence of a first embodiment of a method for manufacturing a marked threaded fastener. The method illustrated in figure 1 is particularly suitable for stainless steel fasteners. The sequence starts with a providing step 11, in which a threaded fastener 1 having at least one marking surface 2 is provided. In the shown embodiment, the threaded fastener 1 is, by way of example a nut having an internally threaded bore therein. Alternatively, it could also be a screw having an external thread structure. Preferably, the threaded fastener 1 consists, as already mentioned, of stainless steel. The at least one marking surface 2 is a spanner flat. By way of example, the provided threaded fastener 1 comprises a total of six spanner flats.

The providing step 11 is followed by a roughening step 12, in which at least the marking surface 2 is roughened, preferably mechanically roughened. Alternatively or additionally, chemical roughening of at least the marking surface 2 could be envisaged in the roughening step 12. In particular, the roughening step 12 is a sandblasting step, in which at least the marking surface 2 is roughened by means of sandblasting. Roughening implies increasing surface roughness, in particular for increasing adhesion of a coating layer 3 or a marking 4, on the marking surface 2. In particular, the marking surface 2 is roughened to have a gloss ranging from 5 gloss units to 50 gloss units, inclusive, in the roughening step 12.

Following the roughening step 12, a coating step 13 is provided, in which the roughened marking surface 2 is coated with at least one coating layer 3, for example a friction-decreasing or friction-increasing coating layer. Advantageously, the least one coating layer 3 is applied to the entire surface of the threaded fastener 1.

The coating step 13 is followed by a marking step 14, in which a marking 4, preferably a barcode, in particular a 2D barcode such as a DMC code or a QR code, is applied to the at least one marking surface 2. The marking 4 is applied over the at least one coating layer 3 in the coating step 13, which means that the coating layer 3 is sandwiched between the marking 4 and the marking surface 2. In particular, the marking step 14 is a printing step, in which the marking 4 is printed, preferably ink jet printed, on the at least one marking surface 2.

Figure 2 shows the step sequence of a second embodiment of a method for manufacturing a marked threaded fastener. The method illustrated in figure 2 is particularly suitable for carbon steel fasteners. The sequence starts with a providing step 21, in which a threaded fastener 1 having at least one marking surface 2 is provided. In the shown embodiment, the threaded fastener 1 is, by way of example a nut having an internally threaded bore therein. Alternatively, it could also be a screw having an external thread structure. Preferably, the threaded fastener 1 provided consists, as already mentioned, of carbon steel. The at least one marking surface 2 is a is a spanner flat. By way of example, the provided threaded fastener 1 comprises a total of six spanner flats.

The providing step 21 is followed by a roughening step 22, in particular a chemical roughening step, in which at least the marking surface 2, preferably the entire surface of the threaded fastener 1, is covered with an anti-corrosion material layer 7, preferably by means of dull zinc plating. Thus, the anti-corrosion layer 7 is preferably a dull zinc layer. In particular, the anti-corrosion layer 7 provides the marking surface 2 with a gloss ranging from 5 gloss units to 50 gloss units, inclusive.

Following the roughening 22, a coating step 23 is provided, in which the dull zinc plated marking surface 2 is overcoated with at least one overcoat layer 8, for example a friction-decreasing or friction-increasing overcoat layer. Advantageously, the least one overcoat layer 8 is applied to the entire surface of the threaded fastener 1.

The coating step 23 is followed by a marking step 24, in which a marking 4, preferably a barcode, in particular a 2D barcode such as a DMC code or a QR code, is applied to the at least one marking surface 2. The marking 4 is applied over the anti-corrosion layer 7 and over the at least one overcoat layer 8 in the coating step 13, which means that the coating layer 3 and the at least one overcoat layer 8 are sandwiched between the marking 4 and the marking surface 2. In particular, the marking step 14 is a printing step, in which the marking 4 is printed, preferably ink jet printed, on the at least one marking surface 2.

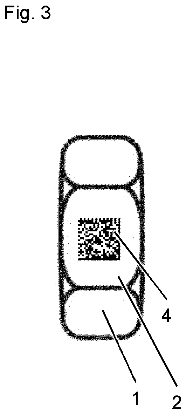

Figure 3 shows a marked threaded fastener 1 that may be obtained by the method shown in figure 1 or by the method shown in figure 2. The marked threaded fastener 1 is provided with a marking 4 applied to a marking surface 2, wherein the marking surface 2 has a gloss ranging from 5 gloss units to 50 gloss units, inclusive (in particular adjacent to the marking 4).

The marking 4 can be sized as follows:

For the marking area x, that is the surface area of the marking 4, the following relation can apply:

$$x = \begin{cases} \{x \in \mathbb{R} \mid 12 < x < 17\}, & if\ M < 7.5 \\ \{x \in \mathbb{R} \mid 12 < x < M^3 * 0.175 + M^2 * (-3.16) + M * 17.9 - 12.5\}, & if\ 7.5 \leq M \leq 12 \\ \{x \in \mathbb{R} \mid 12 < x < 50\}, & else \end{cases}$$

wherein the marking area x is in mm$^2$, and M is the thread size of the threaded fastener 1 in mm.

For the aspect ratio y of the marking 4, which is the ratio of its longer side to its shorter size,

$$y = \frac{longer\ side}{shorter\ side},$$

the following relation might apply:

$$y = \left\{ y \in \mathbb{R} \mid 1 \leq y \leq x * \frac{8.3}{100} \right\}$$

wherein x is again the marking area in mm$^2$.

## Claims

1. Method for manufacturing a marked threaded fastener (1) comprising,

   - a providing step (11; 21), in which a threaded fastener (1) having at least one marking surface (2) is provided,
   - following the providing step (11), a roughening step (12; 22), in which the marking surface (2) is roughened, and
   - following the roughening step (12; 22), a marking step (14; 24), in which a marking (4) is applied to the at least one marking surface (2).

2. Method according to claim 1,
   **characterized in that**
   the marking surface (2) is a spanner flat.

3. Method according to any of the preceding claims,
   **characterized in that**
   the threaded fastener (1) is a nut having a threaded bore therein.

4. Method according to any of the preceding claims,
   **characterized in that**
   the roughening step (12) is a sandblasting step, in which the marking surface (2) is roughened by sandblasting.

5. Method according to any of the preceding claims,
   **characterized in that**
   the threaded fastener (1) is a stainless-steel fastener.

6. Method according to any of the preceding claims,
   **characterized in that**
   in the roughening step (12; 22), the marking surface (2) is roughened to have a gloss ranging from 5 gloss units to 50 gloss units, inclusive.

7.  Method according to any of the preceding claims,
    **characterized in that**
    the method further comprises, following the roughening step (12; 22), a coating step (13; 23), in which the roughened marking surface (2) is coated with at least one coating layer (3) or at least one overcoat layer (8), wherein the marking step (14; 24) follows the coating step (13; 23).

8.  Method according to any of the preceding claims,
    **characterized in that**
    the marking step (14; 24) is a printing step, in which the marking (4) is printed on the at least one marking surface (2).

9.  Method according to any of the preceding claims,
    **characterized in that**
    the marking (4) is a barcode.

10. Threaded fastener (1), preferably manufactured by a method according to any of the preceding claims, having a marking surface (2), on top of which at least one coating layer (3) or overcoat layer (8) is provided, on top of which at least one marking (4) is provided, wherein the marking surface (2) has gloss ranging from 5 gloss units to 50 gloss units, inclusive.

Fig. 1

11    12    13    14

1    1, 2    1, 2    1, 2, 3    4

1, 2, 3

Fig. 2

21    22    23    24

1    1, 2    1, 2, 7    1, 2, 7, 8    4

1, 2, 7, 8

Fig. 3

Europäisches
Patentamt

European
Patent Office

Office européen
des brevets

# EUROPEAN SEARCH REPORT

Application Number

EP 22 16 7761

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2021 106817 A1 (FISCHERWERKE GMBH & CO KG [DE]) 23 December 2021 (2021-12-23) | 1-3,5-10 | INV.<br>F16B1/00 |
| A | * figure 1 *<br>* paragraphs [0003] – [0005], [0018], [0023] – [0031] * | 4 | F16B37/00 |
| A | CN 107 655 610 A (CRRC QINGDAO SIFANG CO LTD) 2 February 2018 (2018-02-02)<br>* figure 1 * | 1-10 | |
| A | US 2007/152046 A1 (HSIEH CHIH-CHING [TW]) 5 July 2007 (2007-07-05)<br>* figure 4 * | 1-10 | |

TECHNICAL FIELDS
SEARCHED      (IPC)

F16B

The present search report has been drawn up for all claims

| Place of search | Date of completion of the search | Examiner |
|---|---|---|
| Munich | 22 September 2022 | Schandel, Yannick |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
....................................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 16 7761

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2022

| Patent document cited in search report | Publication date | Patent family member(s) | Publication date |
|---|---|---|---|
| DE 102021106817 A1 | 23-12-2021 | DE 102021106817 A1<br>WO 2021254831 A1 | 23-12-2021<br>23-12-2021 |
| CN 107655610 A | 02-02-2018 | NONE | |
| US 2007152046 A1 | 05-07-2007 | NONE | |

EPO FORM P0459

For more details about this annex : see Official Journal of the European Patent Office, No. 12/82

**EP 4 261 421 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1171716 B1